(19) Europäisches Patentamt
European Patent Office
Office européen des brevets

(11) **EP 2 913 637 B1**

(12) **EUROPÄISCHE PATENTSCHRIFT**

(45) Veröffentlichungstag und Bekanntmachung des Hinweises auf die Patenterteilung:
**27.04.2016  Patentblatt 2016/17**

(51) Int Cl.:
**G01B 7/30** (2006.01)      **G01D 5/20** (2006.01)

(21) Anmeldenummer: **14000709.7**

(22) Anmeldetag: **27.02.2014**

(54) **Resolver**

Resolver

Résolveur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.09.2015  Patentblatt 2015/36**

(73) Patentinhaber: **LTN Servotechnik GmbH**
**83624 Otterfing (DE)**

(72) Erfinder:
• **Logé, Hans**
**85630 Neukeferloh (DE)**

• **Hick, Manfred**
**83052 Bruckmühl (DE)**
• **Angerpointner, Ludwig**
**81247 München (DE)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
**EP-A1- 1 408 309      JP-A- S59 154 319**
**US-A- 4 928 046      US-A- 5 032 750**

EP 2 913 637 B1

**Beschreibung**

Die Erfindung betrifft einen Resolver gemäß dem Anspruch 1.

**GEBIET DER TECHNIK**

Als Resolver bezeichnet man in der Elektrotechnik einen elektromagnetischen Messumformer zur Wandlung der Winkellage eines Rotors in eine elektrische Größe, bzw. in elektrische Signale. Diese Signale dienen letztlich zur Bestimmung der relativen Winkellage beziehungsweise der relativen Winkelgeschwindigkeit zwischen zwei zueinander drehbaren Baueinheiten, beispielsweise zwei zueinander drehbarer Maschinenteile. In der vorliegenden Anmeldung umfasst der Begriff Resolver auch Messumformer, die mit Synchro oder Drehmelder bezeichnet werden.

**STAND DER TECHNIK**

Die bekannten Resolver dienen dazu eine Winkellage zwischen einem feststehenden Maschinenteil (Stator) und einem dazu rotierenden Maschinenteil (Rotor) zu messen. Dokument US 4928046 offenbart einen Resolver mit drei Transformatoren.

**ZUSAMMENFASSUNG DER ERFINDUNG**

Der Erfindung liegt die Aufgabe zugrunde, einen kostengünstig herstellbaren und robusten Resolver zu schaffen, durch welchen eine Winkellage zwischen zwei mit unterschiedlichen Drehzahlen rotierenden Maschinenteilen messbar ist.

Diese Aufgabe wird erfindungsgemäß durch die Merkmale des Anspruchs 1 gelöst.

Entsprechend umfasst der erfindungsgemäße Resolver eine erste Baueinheit, die Sendewicklungen und eine erste Wicklung eines ersten Transformators aufweist. Ferner umfasst der Resolver eine zweite Baueinheit, die Empfängerwicklungen und eine erste Wicklung eines zweiten Transformators sowie eine erste Wicklung eines dritten Transformators aufweist. Weiterhin umfasst der Resolver eine dritte Baueinheit, die eine zweite Wicklung des ersten Transformators sowie eine zweite Wicklung des zweiten Transformators sowie eine zweite Wicklung des dritten Transformators aufweist. Die drei Baueinheiten sind jeweils relativ zueinander um eine Achse drehbar angeordnet. Die Wicklungen des ersten Transformators, die Wicklungen des zweiten Transformators, die Wicklungen des dritten Transformators sowie die Sendewicklungen und die Empfängerwicklungen sind jeweils mit radialem Spalt einander gegenüber liegend angeordnet.

Mit Vorteil weist die dritte Baueinheit eine elektrische Kupplung zum Anschluss des Resolvers an eine Spannungsversorgung und / oder einer Folgeelektronik auf. Diese Bauweise eröffnet insbesondere die Möglichkeit, dass die dritte Baueinheit als Stator, also nicht rotierend, einsetzbar ist. Dabei sind die erste Baueinheit relativ zur dritten Baueinheit, die erste Baueinheit relativ zur zweiten Baueinheit und die zweite Baueinheit relativ zur dritten Baueinheit drehbar angeordnet.

In weiterer Ausgestaltung der Erfindung ist der Resolver so konfiguriert, dass eine zur Versorgung der Sendewicklungen erforderliche Spannung von der dritten Baueinheit über den ersten Transformator auf die erste Baueinheit insbesondere in die Sendewicklungen übertragbar ist.

Besonders vorteilhaft ist es, wenn der der Resolver so konfiguriert ist, dass Spannungssignale, insbesondere von den Empfängerwicklungen kommend, jeweils von der zweiten Baueinheit über den zweiten und / oder dritten Transformator auf die dritte Baueinheit, insbesondere auf die elektrische Kupplung, übertragbar sind.

Mit Vorteil insbesondere im Hinblick auf eine Bauraum sparende Bauweise ist der erste Transformator mit einem anderen Abstand zur Achse angeordnet als der zweite oder der dritte Transformator.

Weiterhin können der zweite Transformator und der dritte Transformator bezüglich des Abstands zur Achse überlappend angeordnet sein. Mit anderen Worten können der zweite Transformator und der dritte Transformator so angeordnet sein, dass eine Gerade, die parallel zur Achse orientiert ist, beide Transformatoren durchdringt. In einem Sonderfall können der zweite Transformator und der dritte Transformator so angeordnet sein, dass deren radiale Spalte (also die Spalte zwischen den Wicklungen des betreffenden Transformators) jeweils den gleichen Abstand zur Achse aufweisen. Insbesondere können der zweite Transformator und der dritte Transformator axial aneinander gereiht angeordnet sein.

Mit Vorteil sind die Transformatoren in zumindest zwei konzentrisch zueinander angeordneten Gehäusen angeordnet, wobei insbesondere die Innendurchmesser der Gehäuse unterschiedliche Durchmesser beziehungsweise Abstände zur Achse aufweisen, so dass in diesem Fall die Transformatoren konzentrisch mit radialem Versatz zueinander angeordnet sein können.

In weiterer Ausgestaltung der Erfindung weisen die zweite Wicklung des zweiten Transformators und die zweite Wicklung des dritten Transformators jeweils den gleichen Durchmesser auf. Alternativ oder ergänzend weisen die erste Wicklung des zweiten Transformators und die erste Wicklung des dritten Transformators jeweils den gleichen Durchmesser auf. Üblicherweise sind die Wicklungen der Transformatoren als Ringspulen um die Achse ausgeführt, so dass die betreffenden Durchmesser senkrecht (und symmetrisch beziehungsweise konzentrisch) zur Achse orientiert sind, wobei die Achse von den Durchmesserlinien geschnitten wird.

Häufig sind die Wicklungen der Transformatoren in Wicklungsgehäusen angeordnet, demgemäß weisen mit Vorteil das Wicklungsgehäuse der zweiten Wicklung des zweiten Transformators und das Wicklungsgehäuse der zweiten Wicklung des dritten Transformators jeweils den gleichen Durchmesser auf, wobei als Durchmesser der Wicklungsgehäuse die relevanten Durchmesser verstanden werden können zur Montage an ein weiteres Gehäuse. Alternativ oder ergänzend weisen das Wicklungsgehäuse der ersten Wicklung des zweiten Transformators und das Wicklungsgehäuse der ersten Wicklung des dritten Transformators jeweils den gleichen Durchmesser, insbesondere jeweils den gleichen Innendurchmesser auf.

Mit Vorteil ist zwischen der ersten Baueinheit und der zweiten Baueinheit sowie zwischen der zweiten Baueinheit und der dritten Baueinheit jeweils zumindest ein Lager, insbesondere ein Wälzlager, angeordnet.

In weiterer Ausgestaltung der Erfindung ist die erste Baueinheit derart konfiguriert ist, dass diese an einer Welle drehfest festlegbar ist.

Insbesondere wenn die erste Baueinheit an einer Welle drehfest festlegbar ist, kann die zweite Baueinheit derart konfiguriert sein, dass die erste Wicklung des zweiten Transformators und / oder die erste Wicklung des dritten Transformators mit größerem Abstand zur Achse angeordnet ist als die Empfängerwicklungen.

Weiterhin kann dann die dritte Baueinheit derart konfiguriert sein, dass die zweite Wicklung des zweiten Transformators und / oder die zweite Wicklung des dritten Transformators mit größerem Abstand zur Achse angeordnet ist als die zweite Wicklung des ersten Transformators.

In weiterer Ausgestaltung der Erfindung ist die zweite Baueinheit derart konfiguriert ist, dass diese an einer Welle drehfest festlegbar ist.

Insbesondere wenn die zweite Baueinheit an einer Welle drehfest festlegbar ist, kann die zweite Baueinheit derart konfiguriert sein, dass die erste Wicklung des zweiten Transformators und / oder die erste Wicklung des dritten Transformators mit kleinerem Abstand zur Achse angeordnet ist als die Sendewicklungen.

Weiterhin kann dann die dritte Baueinheit derart konfiguriert sein, dass die zweite Wicklung des zweiten Transformators und / oder die zweite Wicklung des dritten Transformators mit kleinerem Abstand zur Achse angeordnet ist als die zweite Wicklung des ersten Transformators.

Vorteilhafte Ausbildungen der Erfindung entnimmt man den abhängigen Ansprüchen.

Weitere Einzelheiten und Vorteile des erfindungsgemäßen Resolvers ergeben sich aus der nachfolgenden Beschreibung zweier Ausführungsbeispiele anhand der beiliegenden Figuren.

## KURZE BESCHREIBUNG DER ZEICHNUNGEN

Es zeigen die

Figur 1 eine Längsschnittdarstellung eines Resolvers gemäß einem ersten Ausführungsbeispiel,

Figur 2 eine Längsschnittdarstellung eines Resolvers gemäß einem zweiten Ausführungsbeispiel.

## BESCHREIBUNG DER AUSFÜHRUNGSFORMEN

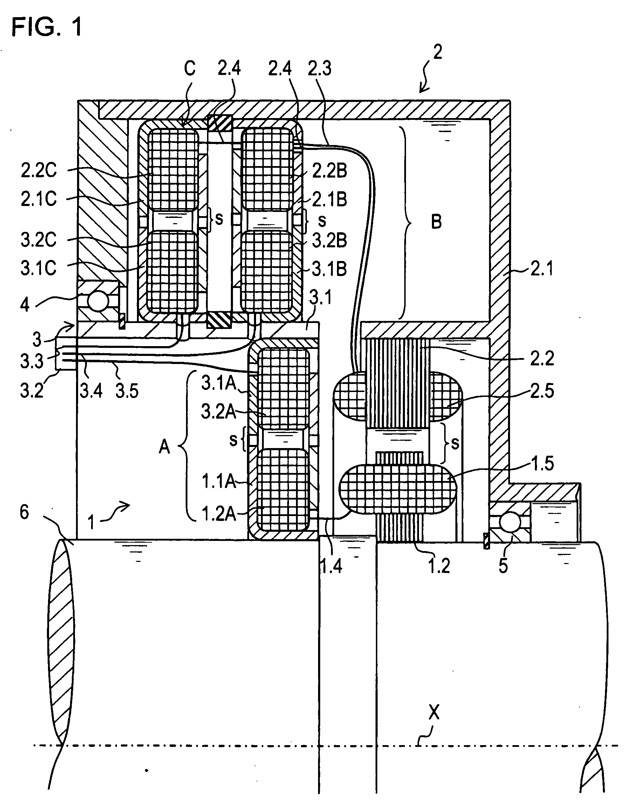

Gemäß einem ersten Ausführungsbeispiel nach der Figur 1 umfasst der Resolver eine erste Baueinheit 1, welche Sendewicklungen 1.5 zum Senden von Resolversignalen und ein zugehöriges Blechpaket 1.2 umfasst. Das Blechpaket 1.2 weist Zähne und zwischen den Zähnen vorliegende Nuten auf, wobei die Sendewicklungen 1.5 in den Nuten angeordnet sind.

Weiterhin sind der ersten Baueinheit 1 eine Wicklung 1.2A in einem insbesondere zweiteiligem Wicklungsgehäuse 1.1A zugeordnet, wobei die Wicklung 1.2A und das Wicklungsgehäuse 1.1A Teil eines ersten Transformators A sind. Das Blechpaket 1.2 und das Wicklungsgehäuse 1.1A des ersten Transformators A sind drehfest an einer Welle 6 fixiert. Zudem umfasst die erste Baueinheit 1 ein Kabel 1.4, welches als elektrische Verbindung zwischen den Wicklungen 1.2A des ersten Transformators A und den Sendewicklungen 1.5 dient.

Mit radialem Spalt s der Sendewicklungen 1.5 gegenüber liegend angeordnet sind Empfängerwicklungen 2.5, die einer zweiten Baueinheit 2 zugeordnet sind. Die Empfängerwicklungen 2.5 sind an einem Blechpaket 2.2 befestigt. Im vorliegenden Ausführungsbeispiel sind zwei um 90° versetzte Empfängerwicklungen 2.5 vorgesehen. Ferner weist die zweite Baueinheit 2 ein Gehäuse 2.1 auf. Innerhalb dieses Gehäuses 2.1 und mit diesem drehfest verbunden befinden sich eine Wicklung 2.2B, die ihrerseits in einem Wicklungsgehäuse 2.1 B angeordnet ist, und eine weitere Wicklung 2.2C, die in einem weiteren Wicklungsgehäuse 2.1C angeordnet ist. Die Wicklungen 2.2B und das zugehörige Wicklungsgehäuse 2.1 B sind Bestandteil eines zweiten Transformators B, wogegen die Wicklung 2.2C mit dem Wicklungsgehäuse 2.1C zu einem dritten Transformator C gehört. Über Kabel 2.3, 2.4 sind die Wicklungen 2.2B, 2.2C des zweiten und dritten Transformators B, C mit den Empfängerwicklungen 2.5 elektrisch verbunden. Alternativ können beispielsweise anstatt der Kabel 1.4, 2.3, 2.4 die Drähte der Wicklungen 1.2A, 2.2B, 2.2C unmittelbar an die Sendewicklungen 1.5 beziehungsweise die Empfängerwicklungen 2.5 angeschlossen sein.

Die zweite Baueinheit 2 ist gegenüber der Welle 6 und damit auch gegenüber der ersten Baueinheit 1 mit Hilfe eines Lagers 5 drehbar gelagert, so dass also die erste Baueinheit 1 und die zweite Baueinheit 2 relativ zueinander um eine Achse X drehbar angeordnet sind.

Weiterhin weist der Resolver eine dritte Baueinheit 3 auf, welche ein tubusartiges Gehäuse 3.1 umfasst. An der Innenseite des Gehäuses 3.1 ist eine Wicklung 3.2A in einem Wicklungsgehäuse 3.1A montiert, wobei die Wicklung 3.2A und das Wicklungsgehäuse 3.1A dem ersten Transformator A zuzuordnen sind. Demnach sind die Wicklungen 1.2A, 3.2A der ersten und dritten Baueinheit 1, 3 mit radialem Spalt s einander gegenüber liegend angeordnet. Außerdem umfasst die dritte Baueinheit 3 die Wicklungen 3.2B, 3.2C und die zugehörigen Wicklungsgehäuse 3.1B, 3.1C des zweiten und des dritten Transformators B, C. Von außen her zugänglich weist die dritte Baueinheit 3 eine elektrische Kupplung 3.2 auf, deren Anschlüsse mit Kabeln 3.3, 3.4, 3.5 elektrisch verbunden sind. Die Kabel 3.3, 3.4, 3.5 können mehradrig ausgestaltet sein, z. B. zweiadrig, so dass die elektrische Kupplung 3.2 entsprechend mehr als in der Figur 1 dargestellte Anschlussstifte oder -buchsen aufweisen kann. Über die elektrische Kupplung 3.2 kann die erforderliche Erregerenergie in Form einer Wechselspannung in den Resolver eingespeist werden und entsprechende Spannungssignale als Messgrößen ausgegeben werden.

Der Resolver umfasst also drei Transformatoren A, B, C. Dabei ist der erste Transformator A mit einem kleineren Abstand zur Achse X angeordnet ist als der zweite Transformator B und zudem mit einem kleineren Abstand zur Achse X angeordnet ist als der dritte Transformator C. Dagegen der sind zweite Transformator B und der dritte Transformator C jeweils mit gleichem Abstand zur Achse X angeordnet, also axial aneinander gereiht.

Gemäß der Figur 1 sind der erste und der zweite Transformator A, B in zwei konzentrisch zueinander angeordneten Gehäusen 2.1, 3.1 angeordnet, wobei die Innendurchmesser der Gehäuse 2.1, 3.1 unterschiedlich sind, so dass man auch von einer radial versetzten Anordnung der Transformatoren A, B sprechen kann. Die gleiche Betrachtung gilt auch für den ersten und den dritten Transformator A, C.

Die zweite Baueinheit 2 ist gegenüber der dritten Baueinheit 3 mit Hilfe eines weiteren Lagers 4 drehbar gelagert. Demgemäß sind also die zweite Baueinheit 2 und die dritte Baueinheit 3 relativ zueinander um eine Achse X drehbar angeordnet. In Verbindung mit der relativen Drehbarkeit der ersten Baueinheit 1 zur zweiten Baueinheit 2 sind also sämtliche Baueinheiten 1, 2, 3 relativ zueinander drehbar angeordnet, so dass der Resolver so betrieben werden kann, dass die erste Baueinheit 1 mit einer ersten Drehzahl n1, die zweite Baueinheit 2 mit einer zweiten Drehzahl n2 und die dritte Baueinheit 3 mit einer dritten Drehzahl n3 rotiert, wobei die erste Drehzahl n1 der Drehzahl der Welle 6 entspricht.

Durch einen entsprechenden Resolver kann die relative Winkellage zwischen der ersten Baueinheit 1 und der zweiten Baueinheit 2 bestimmt werden. Die Welle 6 kann mit einem Antrieb verbunden sein und das Gehäuse 2.1 der zweiten Baueinheit 2 kann zudem mit einem anderen separaten Antrieb verbunden sein.

Der Resolver kann so betrieben werden, dass die dritte Baueinheit 3 als Stator fungiert, wobei dann die zweite Baueinheit 2 relativ zur dritten Baueinheit 3 und zur ersten Baueinheit 1 rotiert, so dass gilt:

$$0 = n3 < n1 \text{ und } 0 = n3 < n2 \text{ und im Allgemeinen } n1 \neq n2.$$

Demnach rotiert die erste Baueinheit 1 relativ zur zweiten Baueinheit 2 mit variabler relativer Drehzahl n1 - n2, wobei die dritte Baueinheit 3 steht.

Zur Bestimmung der relativen Winkellage beziehungsweise der relativen Drehzahl zwischen der ersten Baueinheit 1 und der zweiten Baueinheit 2 wird über das Kabel 3.5 die Wicklung 3.2A der dritten Baueinheit 3 mit einem sinusförmigen Wechselstrom (Erregerenergie) beaufschlagt. Dies hat zur Folge, dass in die Wicklung 1.2A der ersten Baueinheit 1 eine Wechselspannung mit einem vorgegebenen Transformationsverhältnis induziert wird. Diese Wechselspannung liegt über das Kabel 1.4 auch an den Sendewicklungen 1.5 der ersten Baueinheit 1 an. Die zur Versorgung der Sendewicklungen 1.5 erforderliche Spannung wird also über den ersten Transformator A von der dritten Baueinheit 3 auf die erste Baueinheit 1 übertragen.

Folglich werden in den Empfängerwicklungen 2.5 der zweiten Baueinheit 2, welche die Sendewicklungen 1.5 der ersten Baueinheit 1 umschließen, entsprechende Spannungssignale induziert. Bei der Verwendung von zwei um 90° versetzten Empfängerwicklungen 2.5 der zweiten Baueinheit 2 können dann zwei um 90° phasenversetzte Spannungssignale abgegriffen werden, die von der relativen Winkellage zwischen der ersten Baueinheit 1 und der zweiten Baueinheit 2 abhängen.

Die zwei phasenversetzten Spannungssignale werden nun mit Hilfe der Kabel 2.3, 2.4 auf die Wicklungen 2.2B, 2.2C übertragen, wobei die Wicklungen 2.2B, 2.2C ebenso wie die Empfängerwicklungen 2.5 der zweiten Baueinheit 2 zugeordnet sind und jeweils mit der Drehzahl n2 rotieren. Somit ist also jede der Wicklungen 2.2B, 2.2C mit jeweils einem der zwei phasenversetzten Spannungssignalen beaufschlagt. Demgemäß werden die Spannungssignale in die Wicklungen 3.2B, 3.2C der dritten Baueinheit 3 mit einem vorgegebenen Transformationsverhältnis induziert. Diese Spannungssignale werden über die Kabel 3.3, 3.4 schließlich der elektrischen Kupplung 3.2 zugeführt. Von dort können sie über ein nicht dargestelltes Kabel einer Auswertelektronik zugeführt werden.

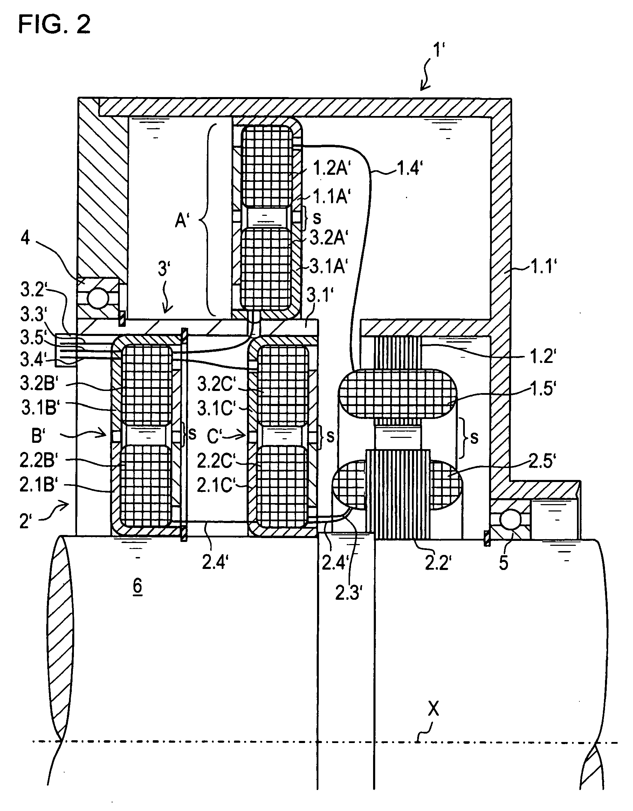

In der Figur 2 ist ein zweites Ausführungsbeispiel der Erfindung gezeigt. Demnach umfasst der Resolver eine erste Baueinheit 1', welche an einem Blechpaket 1.2' angeordnete Sendewicklungen 1.5' zum Senden von Resolversignalen aufweist. Außerdem sind der ersten Baueinheit 1' in einem Wicklungsgehäuse 1.1A' eine Wicklung 1.2A' zugeordnet. Die Wicklung 1.2A' und das Wicklungsgehäuse 1.1A' sind Teil eines ersten Transformators A'. Das Blechpaket 1.2' und das Wicklungsgehäuse 1.1A' des ersten Transformators A' sind drehfest an einem Gehäuse 1.1' fixiert. Zudem umfasst die erste Baueinheit 1 ein Kabel 1.4', welches als elektrische Verbindung zwischen den Wicklungen 1.2A' des ersten Transformators A und den Sendewicklungen 1.5' dient.

Weiterhin weist der Resolver Empfängerwicklungen 2.5' auf, die mit radialem Spalt s den Sendewicklungen 1.5' gegenüber liegend angeordnet sind. Die Empfängerwicklungen 2.5' sind an einem Blechpaket 2.2' befestigt und einer zweiten Baueinheit 2' zugeordnet. Auch im zweiten Ausführungsbeispiel sind zwei um 90° versetzte Empfängerwicklungen 2.5' vorgesehen. Das Blechpaket 2.2' ist drehfest an einer Welle 6 fixiert, so dass die Empfängerwicklungen 2.5' von der Welle 6 rotatorisch mitgenommen werden. Ebenso ist mit der Welle 6 eine Wicklung 2.2B' drehfest verbunden, die ihrerseits in einem Wicklungsgehäuse 2.1 B' angeordnet ist. Ferner ist eine weitere Wicklung 2.2C', die in einem weiteren Wicklungsgehäuse 2.1C' angeordnet ist, an der Welle 6 drehfest fixiert. Die Wicklungen 2.2B' und das zugehörige Wicklungsgehäuse 2.1 B' sind Bestandteil eines zweiten Transformators B', wogegen die Wicklung 2.2C' mit dem Wicklungsgehäuse 2.1C' zu einem dritten Transformator C gehört. Über Kabel 2.3', 2.4' sind die Wicklungen 2.2B, 2.2C des zweiten und dritten Transformators B', C' mit den Empfängerwicklungen 2.5' elektrisch verbunden.

Gemäß der Figur 2 sind der erste und der zweite Transformator A', B' in zwei konzentrisch zueinander angeordneten Gehäusen 1.1', 3.1' angeordnet, wobei die Innendurchmesser der Gehäuse 1.1', 3.1' unterschiedlich sind, so dass man auch von einer radial versetzten Anordnung der Transformatoren A', B' sprechen kann. Die gleiche Betrachtung gilt auch für den ersten und den dritten Transformator A', C'.

Die zweite Baueinheit 2', insbesondere die Welle 6, ist gegenüber der ersten Baueinheit 1' mit Hilfe eines Lagers 5 drehbar gelagert, so dass also die erste Baueinheit 1' und die zweite Baueinheit 2' relativ zueinander um eine Achse X drehbar angeordnet sind.

Weiterhin umfasst der Resolver eine dritte Baueinheit 3', welche ein tubusartiges Gehäuse 3.1' umfasst. An der Außenseite des Gehäuses 3.1' ist eine Wicklung 3.2A' in einem Wicklungsgehäuse 3.1A' angeordnet, wobei die Wicklung 3.2A' und das Wicklungsgehäuse 3.1A' dem ersten Transformator A' zuzuordnen sind. Demnach sind die Wicklungen 1.2A', 3.2A' der ersten und dritten Baueinheit 1', 3' mit radialem Spalt s einander gegenüber liegend angeordnet. Außerdem umfasst die dritte Baueinheit 3' die Wicklungen 3.2B', 3.2C' und die zugehörigen Wicklungsgehäuse 3.1 B', 3.1C' des zweiten und des dritten Transformators B', C', welche an der Innenseite des Gehäuses 3.1' festgelegt sind. Die dritte Baueinheit 3' weist weiterhin eine von außen her zugängliche elektrische Kupplung 3.2' auf, deren Anschlüsse mit Kabeln 3.3', 3.4', 3.5' elektrisch verbunden sind. Die Kabel 3.3', 3.4', 3.5' können auch im zweiten Ausführungsbeispiel mehradrig ausgestaltet sein, z. B. zweiadrig, so dass die elektrische Kupplung 3.2' entsprechend mehr als in der Figur 2 dargestellte Anschlussstifte oder -buchsen aufweisen kann. Über die elektrische Kupplung 3.2' kann die erforderliche Erregerenergie in Form einer Wechselspannung in den Resolver eingespeist werden und entsprechende Spannungssignale als Messgrößen ausgegeben werden.

Der Resolver umfasst also drei Transformatoren A', B', C'. Dabei ist der erste Transformator A' mit einem größeren Abstand zur Achse X angeordnet ist als der zweite Transformator B' und zudem mit einem größeren Abstand zur Achse X angeordnet ist als der dritte Transformator C'. Dagegen der sind zweite Transformator B' und der dritte Transformator C' jeweils mit gleichem Abstand zur Achse X angeordnet, also axial aneinander gereiht.

Im hier vorgestellten zweiten Ausführungsbeispiel ist die erste Baueinheit 1' gegenüber der dritten Baueinheit 3' mit Hilfe eines weiteren Lagers 4 drehbar gelagert. Demgemäß sind also die erste Baueinheit 1' und die dritte Baueinheit 3 relativ zueinander um eine Achse X drehbar angeordnet. In Verbindung mit der relativen Drehbarkeit der ersten Baueinheit 1' zur zweiten Baueinheit 2' sind also sämtliche Baueinheiten 1', 2', 3' relativ zueinander drehbar angeordnet, so dass der Resolver so betrieben werden kann, dass die erste Baueinheit 1' mit einer ersten Drehzahl n1', die zweite Baueinheit 2' mit einer zweiten Drehzahl n2' und die dritte Baueinheit 3' mit einer dritten Drehzahl n3' rotiert, wobei die erste Drehzahl n2' der Drehzahl der Welle 6 entspricht.

Durch einen entsprechenden Resolver kann die relative Winkellage zwischen der ersten Baueinheit 1' und der zweiten Baueinheit 2' bestimmt werden. Die Welle 6 kann mit einem Antrieb verbunden sein und das Gehäuse 1.1' der ersten Baueinheit 1' kann zudem mit einem anderen separaten Antrieb verbunden sein.

Der Resolver kann so betrieben werden, dass die dritte Baueinheit 3' als Stator fungiert, wobei dann die zweite Baueinheit 2' relativ zur dritten Baueinheit 3' und zur ersten Baueinheit 1' rotiert, so dass gilt:

$$0 = n3' < n1' \text{ und } 0 = n3' < n2' \text{ und im Allgemeinen } n1' \neq n2'.$$

Demnach rotiert die erste Baueinheit 1' relativ zur zweiten Baueinheit 2' mit variabler relativer Drehzahl Differenzdrehzahl n1' - n2', wobei die dritte Baueinheit 3' steht.

Zur Bestimmung der relativen Winkellage beziehungsweise der relativen Drehzahl zwischen der ersten Baueinheit 1' und der zweiten Baueinheit 2' wird über das Kabel 3.5' die Wicklung 3.2A' der dritten Baueinheit 3 mit einem sinusförmigen Wechselstrom (Erregerenergie) beaufschlagt. Dies hat zur Folge, dass in die Wicklung 1.2A' der ersten Baueinheit 1' eine Wechselspannung mit einem vorgegebenen Transformationsverhältnis induziert wird. Diese Wechselspannung liegt über das Kabel 1.4' auch an den Sendewicklungen 1.5' der ersten Baueinheit 1' an. Die zur Versorgung der Sendewicklungen 1.5' erforderliche Spannung wird also über den ersten Transformator A' von der dritten Baueinheit 3' auf die erste Baueinheit 1' übertragen. Folglich werden in den Empfängerwicklungen 2.5' der zweiten Baueinheit 2', welche die Sendewicklungen 1.5' der ersten Baueinheit 1' umschließen, entsprechende Ausgangsspannungen induziert. Bei der Verwendung von zwei um 90° versetzten Empfängerwicklungen 2.5' der zweiten Baueinheit 2' können dann zwei um 90° phasenversetzte Spannungssignale abgegriffen werden, die von der relativen Winkellage zwischen der ersten Baueinheit 1' und der zweiten Baueinheit 2' abhängen.

Die zwei phasenversetzten Spannungssignale werden nun mit Hilfe der Kabel 2.3', 2.4' auf die Wicklungen 2.2B', 2.2C' übertragen, wobei die Wicklungen 2.2B', 2.2C' ebenso wie die Empfängerwicklungen 2.5' der zweiten Baueinheit 2' zugeordnet sind und jeweils mit der Drehzahl n2' rotieren. Somit ist also jeder der Wicklungen 2.2B', 2.2C' mit jeweils einem der zwei phasenversetzten Spannungssignalen beaufschlagt. Demgemäß werden die Spannungssignale in die Wicklungen 3.2B', 3.2C' der dritten Baueinheit 3' mit einem vorgegebenen Transformationsverhältnis induziert. Diese Spannungssignale werden über die Kabel 3.3', 3.4' schließlich der elektrischen Kupplung 3.2' zugeführt. Von dort können sie über ein nicht dargestelltes Kabel an eine Auswertelektronik weitergeleitet werden.

Der vorliegende Resolver gemäß dem ersten oder dem zweiten Ausführungsbeispiel ist demnach als ein bürsten- oder schleifringloser Resolver ausgestaltet.

Durch die Erfindung kann also ein Resolver geschaffen werden, der beispielsweise vorteilhaft ist, wenn zwei Komponenten mit unterschiedlichen Drehzahlen, z.B. mit n1, n1' und n2, n2' rotieren, wobei jede dieser Drehzahlen sich von 0 unterscheidet. Denn durch den erfindungsgemäßen Resolver können zuverlässig auch bei hohen Drehzahlen die Relativlagen und / oder Relativgeschwindigkeiten der rotierenden Komponenten zueinander bestimmt werden und der Resolver kann zur Kommutierung eines elektrischen Antriebes innerhalb eines rotierenden Systems verwendet werden.

**Patentansprüche**

1. Resolver umfassend

   ¬ eine erste Baueinheit (1; 1'), die Sendewicklungen (1.5; 1.5') und eine erste Wicklung (1.2A; 1.2A') eines ersten Transformators (A; A') aufweist,
   ¬ eine zweite Baueinheit (2; 2'), die Empfängerwicklungen (2.5; 2.5') und eine erste Wicklung (2.2B; 2.2B') eines zweiten Transformators (B; B') und eine erste Wicklung (2.2C; 2.2C') eines dritten Transformators (C; C') aufweist,
   ¬ eine dritte Baueinheit (3, 3'), die eine zweite Wicklung (3.2A; 3.2A') des ersten Transformators (A; A') sowie eine zweite Wicklung (3.2B; 3.2B') des zweiten Transformators (B; B') und eine zweite Wicklung (3.2C; 3.2C') des dritten Transformators (C; C') aufweist, wobei

   die drei Baueinheiten (1, 2, 3; 1', 2', 3') jeweils relativ zueinander um eine Achse (X) drehbar angeordnet sind und die Wicklungen (1.2A, 3.2A; 1.2A', 3.2A') des ersten Transformators (A; A'), die Wicklungen (2.2B, 3.2B; 2.2B', 3.2B') des zweiten Transformators (B; B'), die Wicklungen (2.2C, 3.2C; 2.2C', 3.2C') des dritten Transformators (C; C') sowie die Sendewicklungen (1.5; 1.5') und die Empfängerwicklungen (2.5; 2.5') jeweils mit radialem Spalt (s) einander gegenüber liegend angeordnet sind.

2. Resolver gemäß dem Anspruch 1, wobei die dritte Baueinheit (3, 3') eine elektrische Kupplung (3.2; 3.2') aufweist zum Anschluss des Resolvers an eine Spannungsversorgung und / oder einer Folgeelektronik.

**3.** Resolver gemäß dem Anspruch 1 oder 2, wobei der Resolver so konfiguriert ist, dass eine zur Versorgung der Sendewicklungen (1.5; 1.5') erforderliche Spannung von der dritten Baueinheit (3, 3') über den ersten Transformator (A; A') auf die erste Baueinheit (1:1') übertragbar ist.

**4.** Resolver gemäß einem der vorhergehenden Ansprüche, wobei der Resolver so konfiguriert ist, dass Spannungssignale jeweils von der zweiten Baueinheit (2; 2') über den zweiten und / oder dritten Transformator (A, C; A', C') auf die dritte Baueinheit (3, 3') übertragbar sind.

**5.** Resolver gemäß einem der vorhergehenden Ansprüche, wobei der erste Transformator (A; A') mit einem anderen Abstand zur Achse (X) angeordnet ist als der zweite oder der dritte Transformator (B, C; B', C').

**6.** Resolver gemäß einem der vorhergehenden Ansprüche, wobei der zweite Transformator (B; B') und der dritte Transformator (C; C') bezüglich des Abstands zur Achse (X) überlappend angeordnet sind.

**7.** Resolver gemäß einem der vorhergehenden Ansprüche, wobei die Transformatoren (A, A'; B, C; B', C') in zumindest zwei konzentrisch zueinander angeordneten Gehäusen (2.1, 3.1; 1.1', 3.1') angeordnet sind.

**8.** Resolver gemäß einem der vorhergehenden Ansprüche, wobei
die zweite Wicklung (3.2B; 3.2B') des zweiten Transformators (B; B') und die zweite Wicklung (3.2C; 3.2C') des dritten Transformators (C; C') jeweils den gleichen Durchmesser aufweisen und / oder
die erste Wicklung (2.2B; 2.2B') des zweiten Transformators (B; B') und die erste Wicklung (2.2C; 2.2C') des dritten Transformators (C; C') jeweils den gleichen Durchmesser aufweisen.

**9.** Resolver gemäß einem der vorhergehenden Ansprüche, wobei zwischen der ersten Baueinheit (1; 1') und der zweiten Baueinheit (2; 2') sowie zwischen der zweiten Baueinheit (2; 2') und der dritten Baueinheit (3, 3') jeweils zumindest ein Lager (4, 5) angeordnet ist.

**10.** Resolver gemäß einem der vorhergehenden Ansprüche, wobei die erste Baueinheit (1) derart konfiguriert ist, dass diese an einer Welle (6) drehfest festlegbar ist.

**11.** Resolver gemäß dem Anspruch 10, wobei die zweite Baueinheit (2) derart konfiguriert ist, dass die erste Wicklung (2.2B) des zweiten Transformators (B) oder die erste Wicklung (2.2C) des dritten Transformators (C) mit größerem Abstand zur Achse (X) angeordnet ist als die Empfängerwicklungen (2.5).

**12.** Resolver gemäß einem der Ansprüche 10 oder 11, wobei die dritte Baueinheit (3) derart konfiguriert ist, dass die zweite Wicklung (3.2B) des zweiten Transformators (B) oder die zweite Wicklung (3.2C) des dritten Transformators (C) mit größerem Abstand zur Achse (X) angeordnet ist als die zweite Wicklung (3.2A) des ersten Transformators (A).

**13.** Resolver gemäß einem der Ansprüche 1 bis 9, wobei die zweite Baueinheit (2') derart konfiguriert ist, dass diese an einer Welle (6) drehfest festlegbar ist.

**14.** Resolver gemäß dem Anspruch 13, wobei die zweite Baueinheit (2') derart konfiguriert ist, dass die erste Wicklung (2.2B') des zweiten Transformators (B') oder die erste Wicklung (2.2C') des dritten Transformators (C') mit kleinerem Abstand zur Achse (X) angeordnet ist als die Sendewicklungen (1.5').

**15.** Resolver gemäß einem der Ansprüche 13 oder 14, wobei die dritte Baueinheit (3') derart konfiguriert ist, dass die zweite Wicklung (3.2B') des zweiten Transformators (B') oder die zweite Wicklung (3.2C') des dritten Transformators (C') mit kleinerem Abstand zur Achse (X) angeordnet ist als die zweite Wicklung (3.2A') des ersten Transformators (A').

**Claims**

**1.** Resolver comprising

 - a first structural unit (1; 1') which has transmission windings (1.5; 1.5') and a first winding (1.2A; 1.2A') of a first transformer (A; A'),
 - a second structural unit (2; 2') which has receiver windings (2.5; 2.5') and a first winding (2.2B; 2.2B') of a second transformer (B; B') and a first winding (2.2C; 2.2C') of a third transformer (C; C'),
- a third structural unit (3, 3') which has a second winding (3.2A; 3.2A') of the first transformer (A; A') and a second winding (3.2B; 3.2B') of the second transformer (B; B') and a second winding (3.2C; 3.2C') of the third transformer (C; C'), wherein

the three structural units (1, 2, 3; 1', 2', 3') are each arranged such that they can rotate relative to one another about an axis (X), and
the windings (1.2A, 3.2A; 1.2A', 3.2A') of the first transformer (A; A'), the windings (2.2B, 3.2B; 2.2B', 3.2B') of the second transformer (B; B'), the windings (2.2C, 3.2C; 2.2C', 3.2C') of the third transformer (C; C') and the transmission windings (1.5; 1.5') and the receiver windings (2.5; 2.5') are in each case arranged opposite one another with a radial gap (s).

2. Resolver according to Claim 1, wherein the third structural unit (3, 3') has an electrical coupling (3.2; 3.2') for connection of the resolver to a voltage supply and/or a downstream electronics system.

3. Resolver according to Claim 1 or 2, wherein the resolver is configured such that a voltage which is required for supplying the transmission windings (1.5; 1.5') can be transmitted from the third structural unit (3, 3'), via the first transformer (A; A'), to the first structural unit (1; 1').

4. Resolver according to one of the preceding claims, wherein the resolver is configured such that voltage signals can be transmitted in each case from the second structural unit (2; 2'), via the second and/or third transformer (A, C; A', C'), to the third structural unit (3, 3').

5. Resolver according to one of the preceding claims, wherein the first transformer (A; A') is arranged at a different distance from the axis (X) than the second or the third transformer (B, C; B', C').

6. Resolver according to one of the preceding claims, wherein the second transformer (B; B') and the third transformer (C; C') are arranged so as to overlap with respect to the distance from the axis (X).

7. Resolver according to one of the preceding claims, wherein the transformers (A, A'; B, C; B', C') are arranged in at least two housings (2.1, 3.1; 1.1', 3.1') which are arranged concentrically in relation to one another.

8. Resolver according to one of the preceding claims, wherein
the second winding (3.2B; 3.2B') of the second transformer (B; B') and the second winding (3.2C; 3.2C') of the third transformer (C; C') each have the same diameter, and/or
the first winding (2.2B; 2.2B') of the second transformer (B; B') and the first winding (2.2C; 2.2C') of the third transformer (C; C') each have the same diameter.

9. Resolver according to one of the preceding claims, wherein at least one bearing (4, 5) is in each case arranged between the first structural unit (1; 1') and the second structural unit (2; 2') and also between the second structural unit (2; 2') and the third structural unit (3, 3').

10. Resolver according to one of the preceding claims, wherein the first structural unit (1) is configured in such a way that the said first structural unit can be secured to a shaft (6) in a rotationally fixed manner.

11. Resolver according to Claim 10, wherein the second structural unit (2) is configured in such a way that the first winding (2.2B) of the second transformer (B) or the first winding (2.2C) of the third transformer (C) is arranged at a greater distance from the axis (X) than the receiver windings (2.5).

12. Resolver according to either of Claims 10 and 11, wherein the third structural unit (3) is configured in such a way that the second winding (3.2B) of the second transformer (B) or the second winding (3.2C) of the third transformer (C) is arranged at a greater distance from the axis (X) than the second winding (3.2A) of the first transformer (A).

13. Resolver according to one of Claims 1 to 9, wherein the second structural unit (2') is configured in such a way that the said second structural unit can be secured to a shaft (6) in a rotationally fixed manner.

14. Resolver according to Claim 13, wherein the second structural unit (2') is configured in such a way that the first winding (2.2B') of the second transformer (B') or the first winding (2.2C') of the third transformer (C') is arranged at a shorter distance from the axis (X) than the transmission windings (1.5').

15. Resolver according to either of Claims 13 and 14, wherein the third structural unit (3') is configured in such a way that the second winding (3.2B') of the second transformer (B') or the second winding (3.2C') of the third transformer (C') is arranged at a shorter distance from the axis (X) than the second winding (3.2A') of the first transformer (A').

**Revendications**

1. Résolveur, comprenant :

- un premier module (1 ; 1') qui comporte des enroulements d'émission (1.5 ; 1.5') et un premier enroulement (1.2A ; 1.2A') d'un premier transformateur (A ; A),
- un deuxième module (2 ; 2') qui comporte des enroulements de réception (2.5 ; 2.5') et un premier enroulement (2.2B ; 2.2B') d'un deuxième transformateur (B ; B') et un premier enroulement (2.2C ; 2.2C') d'un troisième transformateur (C ; C'),
- un troisième module (3, 3') qui comporte un deuxième enroulement (3.2A ; 3.2A') du premier transformateur (A ; A') ainsi qu'un deuxième enroulement (3.2B ; 3.2B') du deuxième transformateur (B ; B') et un deuxième enroulement (3.2C ; 3.2C') du troisième transformateur (C ; C'), dans lequel

les trois modules (1, 2, 3 ; 1', 2', 3') sont respectivement disposés de manière à pouvoir être mis en rotation l'un par rapport à l'autre autour d'un axe (X), et
les enroulements (1.2A, 3.2A ; 1.2A', 3.2A') du premier transformateur (A ; A'), les enroulements (2.2B, 3.2B ; 2.2B', 3.2B') du deuxième transformateur (B ; B'), les enroulements (2.2C, 3.2C; 2.2C', 3.2C') du troisième transformateur (C ; C') ainsi que les enroulements d'émission (1.5 ; 1.5') et les enroulements de réception (2.5 ; 2.5') sont respectivement disposés de manière opposée les uns par rapport aux autres avec une fente radiale (s).

2. Résolveur selon la revendication 1, dans lequel le troisième module (3, 3') comporte un couplage électrique (3.2 ; 3.2') pour raccorder le résolveur à une alimentation en tension et/ou à une électronique consécutive.

3. Résolveur selon la revendication 1 ou 2, dans lequel le résolveur est configuré de manière à ce qu'une tension nécessaire à l'alimentation des enroulements d'émission (1.5, 1.5') puisse être transmise par le troisième module (3, 3'), par l'intermédiaire du premier transformateur (A ; A'), au premier module (1 ; 1').

4. Résolveur selon l'une quelconque des revendications précédentes, dans lequel le résolveur est configuré de manière à ce que que des signaux de tension puissent être respectivement transmis par le deuxième module (2 ; 2'), par l'intermédiaire du deuxième et/ou du troisième transformateur (A, C ; A', C'), au troisième module (3, 3').

5. Résolveur selon l'une quelconque des revendications précédentes, dans lequel le premier transformateur (A ; A') est disposé à une autre distance à l'axe (X) que le deuxième ou le troisième transformateur (B, C ; B', C').

6. Résolveur selon l'une quelconque des revendications précédentes, dans lequel le deuxième transformateur (B ; B') et le troisième transformateur (C ; C') sont disposés de manière à se chevaucher par rapport à la distance à l'axe (X).

7. Résolveur selon l'une quelconque des revendications précédentes, dans lequel les transformateurs (A, A' ; B, C ; B', C') sont disposés dans au moins deux boîtiers (2.1, 3.1 ; 1.1', 3.1') disposés de manière concentrique l'un par rapport à l'autre.

8. Résolveur selon l'une quelconque des revendications précédentes, dans lequel le deuxième enroulement (3.2B ; 3.2B') du deuxième transformateur (B ; B') et le deuxième enroulement (3.2C ; 3.2C') du troisième transformateur (C ; C') présentent respectivement les mêmes diamètres et/ou le premier enroulement (2.2B ; 2.2B') du deuxième transformateur (B ; B') et le premier enroulement (2.2C ; 2.2C') du troisième transformateur (C ; C') présentent respectivement les mêmes diamètres.

9. Résolveur selon l'une quelconque des revendications précédentes, dans lequel il est prévu au moins un palier (4 ; 5) entre le premier module (1 ; 1') et le deuxième module (2 ; 2') et entre le deuxième module (2 ; 2') et le troisième module (3 ; 3').

**10.** Résolveur selon l'une quelconque des revendications précédentes, dans lequel le premier module (1) est configuré de manière à ce qu'il puisse être fixé de façon solidaire en rotation à un arbre (6).

**11.** Résolveur selon la revendication 10, dans lequel le deuxième module (2) est configuré de manière à ce que le premier enroulement (2.2B) du deuxième transformateur (B) ou le premier enroulement (2.2C) du troisième transformateur (C) soit disposé à une plus grande distance à l'axe (X) que les enroulements de réception (2.5).

**12.** Résolveur selon la revendication 10 ou 11, dans lequel le troisième module (3) est configuré de manière à ce que le deuxième enroulement (3.2B) du deuxième transformateur (B) ou le deuxième enroulement (3.2C) du troisième transformateur (C) soit disposé à une plus grande distance à l'axe (X) que le deuxième enroulement (3.2A) du premier transformateur (A).

**13.** Résolveur selon l'une quelconque des revendications 1 à 9, dans lequel le deuxième module (2') est configuré de manière à ce qu'il puisse être fixé de façon solidaire en rotation à un arbre (6).

**14.** Résolveur selon la revendication 13, dans lequel le deuxième module (2') est configuré de manière à ce que le premier enroulement (2.2B') du deuxième transformateur (B') ou le premier enroulement (2.2C') du troisième transformateur (C') soit disposé à une plus faible distance à l'axe (X) que les enroulements d'émission (1.5').

**15.** Résolveur selon l'une quelconque des revendications 13 ou 14, dans lequel le troisième module (3') est configuré de manière à ce que le deuxième enroulement (3.2B') du deuxième transformateur (B') ou le deuxième enroulement (3.2C') du troisième transformateur (C') soit disposé à une plus faible distance à l'axe (X) que le deuxième enroulement (3.2A') du premier transformateur (A').

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4928046 A